# EUROPEAN PATENT SPECIFICATION

(11) **EP 3 074 477 B1**
(45) Date of publication and mention of the grant of the patent: **28.06.2017**
(21) Application number: 14795574.4
(22) Date of filing: 27.10.2014
(51) Int. Cl.: C09J 123/18, C09J 123/20, C08L 23/20

(54) **POLYOLEFIN BASED HOT MELT ADHESIVE COMPOSITION**
HEISSGESCHMOLZENE KLEBSTOFFZUSAMMENSETZUNG AUF POLYOLEFINBASIS
COMPOSITION ADHÉSIVE THERMOFUSIBLE À BASE DE POLYOLÉFINES

(30) Priority: 25.11.2013 EP 13194201
(43) Date of publication of application: 05.10.2016
(73) Proprietor: Basell Poliolefine Italia S.r.l., 20127 Milano (IT)
(72) Inventor: SPATARO, Stefano, I-44122 Ferrara (IT); PELLEGATTI, Giampaolo, I-44122 Ferrara (IT); MARCHINI, Roberta, I-44122 Ferrara (IT); PASQUALI, Stefano, I-44122 Ferrara (IT)
(74) Representative: Gaverini, Gaetano Luigi Attilio
(86) International application number: PCT/EP2014/072950
(87) International publication number: WO 2015/074830

(56) References cited:
- EP-A2- 0 314 495
- EP-A2- 0 331 410
- WO-A2-2004/099269
- US-A- 4 833 192
- US-A- 4 844 765
- US-A- 5 256 717
- US-B1- 6 218 457

## Description

The present invention relates to a hot melt adhesive polyolefin composition comprising an high fluidity butene-1 copolymer. The polyolefin composition comprises both thermoplastic and elastomeric polyolefins. It also relates to articles prepared with the said adhesive composition.

The adhesive composition of the present invention can be used in several fields such as in paper and packaging industry, in furniture manufacture e.g. for edgebands, particularly square edges and softforming, for paneling in high moisture environments.

It can be particularly suitable for acting as a glue in tufted or needle punched carpets, the fibres of which are fixed to the primary carpet backing by the said hot melt adhesive composition.

### BACKGROUND OF THE INVENTION

Hot melt adhesive compositions comprising thermoplastic polyolefins are known in the art. Examples of hot melt adhesive compositions are described in published European patent application 671431 (Himont Incorporated). Said compositions are suitable for producing films and bonding the layers to each other.

One of the main drawback shown by the above hot melt composition is that although the exemplified compositions have a low viscosity, i.e. 10,000 mPa·sec, the method to obtain this viscosity is disadvantageous. The high amount of peroxides to be used makes the compositions described hardly suitable from an industrial and economical viewpoint. It is known also as a drawback the unpleasant odor that is often left in polymer products obtained by the use of peroxides in the production process. This is particularly disadvantageous sometime preventing applications e.g. in food packaging applications requiring lower or absent odor.

Low molecular weight polyolefins are known, e.g. from EP 0737233 A1, as components of hot melt adhesive polyester-based compositions to raise and lower Tg (glass transition temperature) and RBSP (ring and ball softening point).

In US2008190541 (A1) it is disclosed an adhesive system which is based on a nonreactive thermoplastic adhesive melt. The adhesive melt (A) contains a mixture of at least two metallocene-catalytically produced copolymers which are different from each other, and which are based on at least two alpha-olefins, whereby the copolymers of the mixture, which are different from each other, have different melt indices (MFIs). The low melt index component is essential to obtain the balance of properties for hot melt adhesive.

In US2008190541 (A1) that the elongation at break of the adhesive system (hot melt adhesive) suitable for use in the Wood and furniture industry is in the range of 200-1200%, determined according to DIN 53455, after coating or application and 24-h storage in the normal climate (50% relative humidity, 20[deg.] C.).

It is still felt the need of polyolefin compositions for hot melt adhesive with a low viscosity but without the above mentioned drawbacks due to the high amount of peroxides and also showing good adhesive properties and high elongation.

### SUMMARY OF THE INVENTION

The Applicant has now found a hot melt adhesive polyolefin composition consisting essentially of thermoplastic and elastomeric polyolefins, showing good adhesive properties and excellent balance of low viscosity and high elongation.

The hot melt adhesive polyolefin composition according to the invention is comprising:
(A) a high melt flow butene-1 copolymer containing from 2 to 4.5% by weight of derived units of ethylene, having Melt flow rate (MFR) measured according to ISO 1133 (190°C, 2.16kg) ranging from 200 to 1500; Intrinsic viscosity (IV) measured in tetrahydronaphthalene (THN) at 135 [deg.]C lower than 0.8 dl/g;
(B) optionally at least one additional polymer; and
(C) optionally at least one resin, and
(D) optionally at least a material selected from waxes, oils or mixture thereof.

The compositions of the present invention do not present the above mentioned drawbacks of the state of the art, the high melt flow butene-1 copolymer having high melt flow ex-reactor, and good adhesion properties.

Another advantage of the hot melt composition of the present invention relates to their good compromise between rheological and thermal properties that help to spread the adhesive in more efficient way. Particularly a small but measurable XR crystallinity (measured via X ray) combined with very slow crystallization kinetics (Tc of component (A) is not even measurable according to the method specified in the examples) turns out in a definite advantage for hot melt adhesive application requiring long times for the operative adhesion steps.

### DETAILED DESCRIPTION OF THE INVENTION

An object of the present invention therefore is a hot melt adhesive polyolefin composition comprising:
(A) a high melt flow butene-1 copolymer containing from 2 to 4.5% by weight of derived units of ethylene, preferably of from 2.5 to 4.5 by weight, having Melt flow rate (MFR) measured according to ISO 1133 (190°C, 2.16kg) ranging from 200 to 1500, preferably from 500 to 900; even more preferably from 550 to 800 g/10min and an intrinsic viscosity, measured in tetrahydronaphthalene at 135°C, lower than 0.8 dl/g;.

Said butene-1 copolymer component (A) preferably has at least one of the following further features:
a) distribution of molecular weight (Mw/Mn) lower than 4; preferably lower than 3; more preferably lower than 2.5; particularly preferred are butene-1 copolymers having Mw equal to or higher than 60.000; even more preferably having also Mn equal to or greater than 30.000 .
b) Intrinsic viscosity (IV) measured in tetrahydronaphthalene (THN) at 135°C comprised between 0.2 dl/g and 0.6 dl/g; even more preferably IV is comprised between 0.3 dl/g and 0.6 dl/g; a further preferred range is between 0.4 dl/g and 0.5 dl/g;
c) melting point lower than 110°C; preferably lower than 100°C; more preferably lower than 90°C; particularly preferably melting points (TmII) measured cancelling the thermal history of the butene-1 copolymer component (A) are lower than 80°C.
d) isotactic pentads (mmmm) measured with 13C-NMR operating at 100.61 MHz higher than 90%; preferably higher than 95%;
e) 4,1 insertions not detectable at a 13C-NMR operating at 100.61 MHz;
g) yellowness index lower than 0; preferably comprised between 0 and -10; more preferably comprised between -1 and -5.

The amount of component (A) being preferably of from 5 to 85% by weight, preferably 15-60%, most preferably 15-45% by weight of the composition. Component (A) can be obtained according to the process and catalyst as described in WO2004/099269 and more particularly as described in WO 2006/045687. As explained in WO 2006/045687, the hydrogen can be advantageously used as molecular weight regulator and as activator of the catalyst system. This with accurate purposive selection of the ethylene comonomer content as explained in WO2004/099269 can provide 1-butene ethylene copolymers endowed with a very low melting point.

The polymerization process of the present invention can be carried out in one or more reactors connected in series, as explained in WO2004/099269 can be carried out in liquid phase, optionally in the presence of an inert hydrocarbon solvent, or in gas phase. Said hydrocarbon solvent can be either aromatic (such as toluene) or aliphatic (such as propane, hexane, heptane, isobutane, cyclohexane and 2,2,4-trimethylpentane, isododecane). Preferably, the polymerization process of the present invention is carried out by using liquid 1-butene as polymerization medium. The polymerization temperature preferably ranges from 20°C to 150°C and, more particularly between 50°C and 90°C, even more particularly it is from 68°C to 82°C.

The concentration of hydrogen during the polymerization reaction liquid phase (mol ppm H2/ (C4-) bulk) is from 2000 ppm to 3000 ppm, preferably it is comprised between 2400 ppm and 2700 ppm.

The amount of ethylene in the liquid phase (%wt C2/C4) is comprised between 0.5 to 1.5 % by weight preferably from 0.6 to 1.8 % by weight

The hot melt adhesive polyolefin composition according to the invention is further comprising:
(B) at least one optional additional polymer, selected from the group of preferably amorphous poly-alpha-olefins, thermoplastic polyurethanes, ethylene/(meth)acrylate copolymers, and ethylene/vinyl acetate copolymers as well mixtures thereof.

The amount of component (B) in the hot melt adhesive composition (adhesive system) according to the invention, it can also vary within broad ranges. In general, the hot melt adhesive contains the additional polymer (B) in quantities of 0.001-30 wt %, particularly 0.01-25 wt %, preferably 1-25 wt % with respect to the hot melt adhesive composition. Nevertheless, depending on the application or the individual case, it may be necessary to deviate from the above-mentioned quantity ranges.

The hot melt adhesive polyolefin composition according to the invention is further comprising:
(C) optionally at least one further resin material different from the polymeric resin components (A) and (B) and selected from aliphatic hydrocarbon resin, terpene/phenolic resin, polyterpenes, rosin, rosin esters and derivatives thereof and a blend thereof;

The amount of the optional component (C) can vary typically of from 10 to 75%, preferably 10-40% by weight of the hot melt adhesive composition.

The hot melt adhesive polyolefin composition further is comprising:
(D) optionally at least a material selected from waxes, oils or mixture thereof. Waxes and oils can be mineral paraffinic or naphtalenic waxes or oils.

The amount of the optional component (D) can vary typically of from 0.001 to 50%, preferably 1-30% by weight of the hot melt adhesive composition.

The composition according to the invention preferably has viscosity from 7,000 to less than 500,000 mPa·sec, according to ASTM D 3236-73, at 190°C, preferably from 10,000 to 80,000 mPa·sec.

Another preferred feature of butene-1 copolymer, component (A), is the presence of visible (detectable) amount of crystalline form III. Crystalline form III has been detected on component (A) via X-Ray diffratometer method described in the Journal of Polymer Science Part B: Polymer Letters Volume 1, Issue 11, pages 587-591, November 1963 o Macromolecules, Vol. 35, No. 7, 2002.

### EXAMPLES

The following examples are given for illustrating but not limiting purposes.
The following analytical methods are used to determine the properties reported in the description and in the examples.

**The intrinsic viscosity (I.V.)** was measured in tetrahydronaphtalene (THN) at 135°C.

**The thermal properties** (melting temperatures and enthalpies) were determined by Differential Scanning Calorimetry (D.S.C.) on a Perkin Elmer DSC-7 instrument. The melting temperatures of butene-1 homo and co-polymers were determined according to the following method:
- TmII (melting temperature/s measured in second heating run): a weighted sample (5-10 mg) obtained from the polymerization was sealed into aluminum pans and heated at 200°C with a scanning speed corresponding to 10°C/minute. The sample was kept at 200°C for 5 minutes to allow a complete melting of all the crystallites thus cancelling the thermal history of the sample. Successively, after cooling to -20°C with a scanning speed corresponding to 10°C/minute, the peak temperature was taken as crystallization temperature (Tc). After standing 5 minutes at - 20°C, the sample was heated for the second time at 200°C with a scanning speed corresponding to 10°C/min. In this second heating run, the peak temperature/s measured were marked as (TmII) and the area under the peak (or peaks) as global melting enthalpy (DH TmII).
- The melting enthalpy and the melting temperature were measured also after aging (without cancelling the thermal history) as follows by using the Differential Scanning Calorimetry (D.S.C.) on an Perkin Elmer DSC-7 instrument. A weighted sample (5-10 mg) obtained from the polymerization was sealed into aluminum pans and heated at 200°C with a scanning speed corresponding to 10°C/minute. The sample was kept at 200°C for 5 minutes to allow a complete melting of all the crystallites. The sample was then stored for 10 days at room temperature. After 10 days the sample was subjected to DSC, it was cooled to -20°C, and then it was heated at 200°C with a scanning speed corresponding to 10°C/min. In this heating run, the peak temperature (or temperatures when more than one peack was present) were recorded as the melting temperatures (TmI), and the area under the peak (or peaks) as global melting enthalpy after 10 days (DH TmI).

**Molecular weight parameters** (Mn, Mw and Mz and IVgpc) values and molecular weight distribution (Mw/Mn) for all the samples were measured using a Waters 150C ALC/GPC instrument (Waters, Milford, Massachusetts, USA) equipped with four mixed-gel columns PLgel 20 µm Mixed-A LS (Polymer Laboratories, Church Stretton, United Kingdom). The dimensions of the columns were 300 × 7.8 mm. The solvent used was TCB and the flow rate was kept at 1.0 mL/min. Solution concentrations were 0.1 g/dL in 1,2,4 trichlorobenzene (TCB). 0.1 g/L of 2,6-di-t-butyl-4-methyl phenol (BHT) was added to prevent degradation and the injection volume was 300 µL. All the measurements were carried out at 135°C. GPC calibration is complex, as no well-characterized narrow molecular weight distribution standard reference materials are available for 1-butene polymers. Thus, a universal calibration curve was obtained using 12 polystyrene standard samples with molecular weights ranging from 580 to 13,200,000. It was assumed that the K values of the Mark-Houwink relationship were: KPS = 1.21 × 10-4, dL/g and KPB = 1.78 × 10-4 dL/g for polystyrene and poly-1-butene respectively. The Mark-Houwink exponents α were assumed to be 0.706 for polystyrene and 0.725 for poly-1-butene. Even though, in this approach, the molecular parameters obtained were only an estimate of the hydrodynamic volume of each chain, they allowed a relative comparison to be made.

**NMR analysis.** 13C-NMR spectra were acquired on a DPX-400 spectrometer operating at 100.61 MHz in the Fourier transform mode at 120 °C. The samples were dissolved in 1,1,2,2-tetrachloroethane-d2 at 120 °C with a 8% wt/v concentration. Each spectrum was acquired with a 90° pulse, 15 seconds of delay between pulses and CPD (waltz16) to remove 1H-13C coupling. About 3000 transients were stored in 32K data points using a spectral window of 6000 Hz. The isotacticity of metallocene-made PB is measured by 13C NMR, and is defined as the relative intensity of the mmmm pentad peak of the diagnostic methylene of the ethyl branch. This peak at 27.73 ppm was used as internal reference. Pentad assignments are given according to Macromolecules, 1992, 25, 6814-6817.
The side chain methylene region of PB spectrum was fitted using the routine for deconvolution included in the Bruker WIN-NMR program. The *mmmm* pentad and the pentads related to the single unit error (*mmmr*, *mmrr* and *mrrm*) were fitted using Lorenzian lineshapes, allowing the program to change the intensity and the width of the lines. As a result the relative intensities of those signals were obtained. These results were used for the statistical modelling of pentad distributions using an enantiomorphic site model, in order to obtain the complete pentad distribution, from which the triad distribution is derived.
Assignments of 4,1 insertion were made according to V. Busico, R. Cipullo, A. Borriello, Macromol. Rapid. Commun. 1995, 16, 269-274. The measurement of comonomer content was also made via NMR after appropriate calibration.

**Melt flow rate** was measured according to ISO 1133 (190°C, 2.16kg) on the butene-1 component (A).

**Comonomer content** (%wt) measured via IR. Spectroscopy, where not differently specified, after appropriate calibration.

**Flexural modulus,** was measured according to ISO 178

**Tensile properties** (strength at yield, elongation at break, strength at break and elongation at yield) have been measured (strain and stress) according to ISO 527-1.

**Specimens for tensile and flexural tests** were cut from compression moulding plaques pressed at 200°C and ageed via autoclave at RT for 10' at 2kbar. Specimen thickness 4 mm for flexural modulus, 2mm for tensile tests.

**Yellowness index** was measured accordingly to ASTM D1925.

**Solubility in Xilene:** Xylene soluble and insoluble fractions (%wt) were determined as follows:
2.5 g of polymer composition and 250 cm3 of O-xylene are introduced in a glass flask equipped with a refrigerator and a magnetical stirrer. The temperature is raised in 30 minutes up to the boiling point of the solvent. The so obtained clear solution is then kept under reflux and stirring for further 30 minutes. The closed flask is then cooled to 100°C in air for 10 to 15 minute under stirring and then kept for 30 minutes in thermostatic water bath at 0 °C for 60 minutes as well . The so formed solid is filtered on quick filtering paper at 0°C. 100 cm3 of the filtered liquid is poured in a previously weighed aluminum container which is heated on a heating plate under nitrogen flow, to remove the solvent by evaporation. The weight percentage of polymer soluble in xylene (XS) at room temperature (25°C) is then calculated.

**Hardness shore D** measured on compression moulded plaques (thickness of 4mm) following the ISO 868.

**Density** measured according to ASTM D 792-00.

**X-Ray Crystallinity** (RX) was measured according to the following method:
The instrument used to measure crystallinity is a X-ray Diffraction Powder Diffractometer (XDPD) that uses the Cu-Kα1 radiation with fixed slits and able to collect spectra between diffraction angle 2Θ = 5° and 2Θ = 35° with step of 0.1° every 6 seconds.

The samples are diskettes of about 1.5-2.5 mm of thickness and 2.5-4.0 cm of diameter made by compression moulding. The diskettes are aged at room temperature (23°C) for 96 hours.

After this preparation the specimen is inserted in the XDPD sample holder. Set the XRPD instrument in order to collect the XRPD spectrum of the sample from diffraction angle 20 = 5° to 2Θ = 35° with step of 0.1° by using counting time of 6 seconds, at the end the final spectrum is collected.

Defining Ta as the total area between the spectrum profile and the baseline expressed in counts/sec·2Θ.; and Aa as the total amorphous area expressed in counts/sec·2Θ. Ca is total crystalline area expressed in counts/sec·2Θ.

The spectrum or diffraction pattern is analysed in the following steps:
1) define a suitable linear baseline for the whole spectrum and calculate the total area (Ta) between the spectrum profile and the baseline;
2) define a suitable amorphous profile, along the whole spectrum, that separate , the amorphous regions from the crystalline ones according to the two phase model;
3) calculate the amorphous area (Aa) as the area between the amorphous profile and the baseline;
4) calculate the crystalline area (Ca) as the area between the spectrum profile and the amorphous profile as Ca = Ta- Aa
5) Calculate the degree of crystallinity (%Cr also marked hereinbelow as crist tot%) of the sample using the following formula: %Cr = 100 x Ca / Ta

**Preparation of catalyst components :** Rac dimethylsilyl{(2,4,7-trimethyl-1-indenyl)-7-(2,5-dimethyl-cyclopenta[1,2-b:4,3-b']-dithiophene)} zirconium dimethyl (A-1); was prepared according to EP 04101020.8.

**Preparation of the catalytic solution:** Under nitrogen atmosphere, 2390 g of a 110 g/L solution of TIBA in isododecane and 664 g of 30% wt/wt solution of MAO in toluene are loaded in a 20 L jacketed glass reactor, stirred by means of an anchor stirrer, and allowed to react at 50-55°C for about 1 hour under stirring.

After this time, 7.09 g of metallocene A-1 is added and dissolved under stirring for about 30 minutes. The so obtained solution was diluted with 1200 g of anhydrous iso-dodecane.

The final solution is discharged from the reactor into a cylinder through a filter to remove eventual solid residues.

The composition of the solution resulted to be:

| %w Al | %w Zr | Al/Zr mol ratio | %w toluene | Conc. g/L |
|---|---|---|---|---|
| 25.32 | 0.22 | 429 | 10 | 107 |

### EXAMPLES

Example 1-3 according to the invention and comparative examples (comp. 1-3) are obtained as follows.

The polymerization was carried out in a stirred reactor in which liquid butene-1 constituted the liquid medium. The catalyst system described above was injected into the reactor at a feed rate of (Catalyst + Alkil) component (A) g/h and the polymerization was carried out in continuous at a polymerization temperature of (B) °C. The residence time was (C) min. The catalyst yield (mileage) is reported as (F) kg/kg referred to (A), or as (F') Kg/g referred to the catalyst feed. Comonomer is almost immediately copolymerized (C2- "stoichiometric" feed to the reactor). Data of the examples are reported in Table 1.

**Table 1**

| example | | Comp. 1 | Comp. 2 | Comp. 3 | 1 | 2 | 3 |
|---|---|---|---|---|---|---|---|
| A (cat+alkyl) | g/h | 3.4 | 2.9 | 3.1 | 3.2 | 3.2 | 3.4 |
| B | °C | 75.0 | 75.0 | 75.0 | 75.0 | 75.0 | 75.0 |
| C | min | 150.4 | 170.3 | 145.6 | 150.0 | 138.6 | 150.3 |
| D' | mol ppm H2/ (C4-+C2-) feed | 2576 | 2587 | 2818 | 1821 | 1811 | 1893 |
| D | mol ppm H2/ (C4-) bulk | 3624 | 3575 | 3932 | 2563 | 2581 | 2670 |
| E - MFR 190° 2.16Kg-ISO 1133 | g/10min | 1348 | 1052 | 1390 | 741 | 713 | 628 |
| F - Mileage | Kg/kg (ref. to catalyst+alkil feed) | 8047 | 8163 | 8898 | 8637 | 9635 | 7856 |
| F' - Mileage | Kg/g (ref. to catalyst feed) | 2912 | 2893 | 3219 | 3125 | 3486 | 2843 |
| %wt C2-/C4- | feed | 0.3 | 0.3 | 0.3 | 0.8 | 1.1 | 1.4 |
| C2- in copolymer (IR) | | 1 | 1 | 1 | 2.9 | 3.9 | 4.5 |
| | | | no steady state | | | | no steady state |

The 1-butene polymer was recovered as melt from the solution and cut in pellets. The polymers obtained in examples 1-3 and comparatives 1-3 were further characterized, the results are reported in Table 2.

**Table 2:**

| example | | Comp. 1 | Comp. 2 | Comp. 3 | 1 | 2 | 3 |
|---|---|---|---|---|---|---|---|
| MFR 190° 2.16Kg - ISO 1133 | g/10min | 1348 | 1052 | 1390 | 741 | 713 | 628 |
| Intrinsic Viscosity (THN) | dl/g | 0.35 | - | - | 0.43 | 0.44 | 0.45 |
| C2 IR | % | 1 | 1 | 1 | 2.9 | 3.9 | 4.5 |
| C2 NMR | % | | | | 2.7 | 3.2 | 4 |
| rlr2 | | | | | 1.61 | 1.28 | 1.21 |
| TmII* | °C | 80.5/85.5 | 78/84 | 80/86 | 75.6 | 71 | nd |
| DH TmII | J/g | 32 | 28 | 26 | 2.9 | 1.94 | nd |
| TmI* | °C | 101.7 | 87/101.6 | 103.3 | 75/88 | 57/61 | 53/66 |
| DH TmI | J/g | 65 | 49 | 65 | 34 | 27 | 22 |
| Tc | °C | 32 | 27 | 31 | - | - | - |
| XS | % | 7.4 | 9.7 | 10.6 | 99.9 | 99.7 | 100 |
| Density | kg/dm³ | 0.908 | 0.9077 | 0.9084 | 0.8989 | 0.8902 | 0.8895 |
| Flex Mod | MPa | 339 | 350 | 276 | 209 | 163 | 130 |
| Strength at yield | MPa | 0 | 0 | 0 | 10.4 | 7.6 | 5.6 |
| Elongation at Yield | % | 0 | 0 | 0 | 19 | 11.5 | 11.7 |
| Strength at Break | MPa | 15.6 | 18.9 | 13.7 | 17.9 | 13.1 | 10 |
| Elongation at Break | % | 8 | 18 | 6 | 390 | 401 | 403 |
| Hardness Shore D | D | 54.7 | 57 | 53.8 | 44 | 36.8 | 35.5 |
| Yellow Index | NR | 2.7 | 0.8 | 2.9 | -1.7 | -2.6 | -1.4 |
| GPC | | | | | | | |
| Ivgpc | dl/g | 0.45 | 0.47 | 0.43 | 0.53 | 0.55 | 0.61 |
| MP | | 48176 | 49858 | 44366 | 58556 | 63806 | 68053 |
| Mn | | 26445 | 26967 | 24325 | 32440 | 34490 | 39235 |
| Mv | | 48177 | 51095 | 45621 | 61301 | 65139 | 75081 |
| Mw | | 51745 | 55174 | 49172 | 66049 | 70174 | 81670 |
| Mz | | 81654 | 91119 | 79654 | 107024 | 113446 | 144110 |
| Mw/Mn | | 2 | 2 | 2 | 2 | 2 | 2.1 |
| Mz/Mw | | 1.6 | 1.7 | 1.6 | 1.6 | 1.6 | 1.8 |
| RX | h | crist tot% | | | | | |
| | 96 | | 51 | 52 | | 29 | 29 |
| | 384 | 50 | | | | | |

| | | | | | | | |
|---|---|---|---|---|---|---|---|
| * When two distinct peaks were readable in the thermogram they were both reported (peakvalue₁/peakvalue₂); DH being determined integrating the overall area under the peak/s. | | | | | | | |

## Claims

1. A hot melt adhesive polyolefin composition comprising:
(A) a high melt flow butene-1 copolymer containing from 2 to 4.5% by weight of derived units of ethylene, having Melt flow rate (MFR) measured according to ISO 1133 (190°C, 2.16kg) ranging from 200 to 1500 and an intrinsic viscosity, measured in tetrahydronaphthalene at 135°C, lower than 0.8 dl/g;
(B) optionally at least one additional polymer component, selected from the group of preferably amorphous poly-alpha-olefins, thermoplastic polyurethanes, ethylene/(meth)acrylate copolymers, and ethylene/vinyl acetate copolymers as well mixtures thereof;
(C) optionally at least one further resin material selected from aliphatic hydrocarbon resin, terpene/phenolic resin, polyterpenes, rosin, rosin esters and derivatives thereof and a blend thereof;
(D) optionally at least a material selected from waxes, oils or mixture thereof.

2. A hot melt adhesive polyolefin composition according to claim 1 wherein the butene-1 copolymer component (A) has a distribution of molecular weight (Mw/Mn) lower than 4, measured by Gel Permeation Chromatography (GPC).

3. A hot melt adhesive polyolefin composition according to claim 1 comprising in percent by weight of the hot melt adhesive composition:
from 5 to 85% of component (A)
from 0.001-30 % of component (B)
from 10 to 75% of component (C)
from 0.001 to 50% of component (D).

4. A hot melt adhesive polyolefin composition according to claim 1 having viscosity of from 7000 to less than 500000 mPa·sec, according to ASTM D 3236-73, at 190°C.

5. Packaging industry or furniture items, comprising the hot melt adhesive polyolefin composition according to claim 1.

6. Tufted or needle punched carpets, comprising the hot melt adhesive polyolefin composition according to claim 1.

## Patentansprüche

1. Heißschmelzklebstoff-Polyolefinzusammensetzung, umfassend:
(A) ein Buten-1-Copolymer mit hohem Schmelzfluss, das 2 bis 4,5 Gew.% von Ethylen abgeleitete Einheiten enthält, das eine gemäß ISO 1133 (190 °C, 2,16 kg) gemessene Schmelzflussrate (MFR) im Bereich von 200 bis 1500 und eine in Tetrahydronaphthalin bei 135 °C gemessene Grenzviskosität unter 0,8 dl/g aufweist;
(B) gegebenenfalls mindestens eine zusätzliche Polymerkomponente ausgewählt aus der Gruppe von vorzugsweise amorphen Poly-alpha-olefinen, thermoplastischen Polyurethanen, Ethylen/(Meth)acrylat-Copolymeren und Ethylen/Vinylacetat-Copolymeren sowie Mischungen davon;
(C) gegebenenfalls mindestens ein weiteres Harzmaterial ausgewählt aus aliphatischem Kohlenwasserstoffharz, Terpen/phenolischem Harz, Polyterpenen, Baumharz, Baumharzestern und Derivaten davon sowie einem Gemisch davon;
(D) gegebenenfalls mindestens einem Material ausgewählt aus Wachsen, Ölen oder Mischungen davon.

2. Heißschmelzklebstoff-Polyolefinzusammensetzung nach Anspruch 1, wobei die Buten-1-Copolymerkomponente (A) eine Verteilung des Molekulargewichts (Mw/Mn) unter 4 aufweist, gemessen mittels Gelpermeationschromatographie (GPC).

3. Heißschmelzklebstoff-Polyolefinzusammensetzung nach Anspruch 1, umfassend in Gewichtsprozent der Heißschmelzklebstoffzusammensetzung:
5 bis 85 % von Komponente (A);
0,001 bis 30 % von Komponente (B);
10 bis 75 % von Komponente (C);
0,001 bis 50 % von Komponente (D).

4. Heißschmelzklebstoff-Polyolefinzusammensetzung nach Anspruch 1 mit einer Viskosität von 7000 bis weniger als 500000 mPa•s gemäß ASTM D 3236-73 bei 190 °C.

5. Güter für die Verpackungsindustrie oder Möbelstücke, umfassend die Heißschmelzklebstoff-Polyolefinzusammensetzung nach Anspruch 1.

6. Getuftete oder Nadelfilzteppiche, umfassend die Heißschmelzklebstoff-Polyolefinzusammensetzung nach Anspruch 1.

## Revendications

1. Composition polyoléfinique adhésive thermofusible comprenant :
(A) un copolymère de butène-1 présentant un indice de fluidité à chaud élevé, contenant 2 à 4,5% en poids d'unités dérivées d'éthylène, présentant un indice de fluidité à chaud (melt flow rate - MFR), mesuré selon la norme ISO 1133 (190°C, 2,16 kg), situé dans la plage de 200 à 1500 et une viscosité intrinsèque, mesurée dans le tétrahydronaphtalène à 135°C, inférieure à 0,8 dl/g ;
(B) éventuellement au moins un constituant polymère supplémentaire, choisi dans le groupe formé par les poly-alpha-oléfines de préférence amorphes, les polyuréthanes thermoplastiques, les copolymères d'éthylène/(méth)acrylate et les copolymères d'éthylène/acétate de vinyle ainsi que leurs mélanges ;
(C) éventuellement un autre matériau de résine, choisi parmi une résine hydrocarbonée aliphatique, une résine terpène/phénolique, les polyterpènes, la colophane, les esters de colophane et leurs dérivés et un mélange de ceux-ci ;
(D) éventuellement au moins un matériau choisi parmi les cires, les huiles ou un mélange de ceux-ci.

2. Composition polyoléfinique adhésive thermofusible selon la revendication 1, le constituant de copolymère de butène-1 (A) présentant une distribution des poids moléculaires (Mw/Mn) inférieure à 4, mesurée par chromatographie par perméation de gel (CPG).

3. Composition polyoléfinique adhésive thermofusible selon la revendication 1, comprenant, en pourcentage en poids de la composition adhésive thermofusible : 5 à 85% de constituant (A)
0,001-30 % de constituant (B)
10 à 75% de constituant (C)
0,001 à 50% de constituant (D).

4. Composition polyoléfinique adhésive thermofusible selon la revendication 1, présentant une viscosité de 7000 à moins de 500.000 mPa•sec, selon la norme ASTM D 3236-73, à 190°C.

5. Objets de l'industrie d'emballage ou de mobilier, comprenant la composition polyoléfinique adhésive thermofusible selon la revendication 1.

6. Tapis tuftés ou aiguilletés, comprenant la composition polyoléfinique adhésive thermofusible selon la revendication 1.
